# EUROPEAN PATENT APPLICATION

(11) **EP 4 722 960 A1**
(43) Date of publication of application: **08.04.2026**
(21) Application number: 24815893.3
(22) Date of filing: 31.05.2024
(51) Int. Cl.: G06F 21/55, G06F 21/57, G10L 15/22, G06N 20/00, G06F 21/50, G06F 30/15, G06Q 10/10, G06Q 50/04

(54) **METHOD FOR DESIGNING CYBER SECURITY OF SHIP AND SYSTEM AND METHOD FOR PROVIDING CYBER SECURITY GUIDE SERVICE USING SAME**

(30) Priority: 31.05.2023 KR 20230069922; 05.06.2023 KR 20230072160
(71) Applicant: Hanwha Ocean Co., Ltd., Geoje-si, Gyeongsangnam-do 53302 (KR); Cytur Inc., Seoul 08511 (KR)
(72) Inventor: JEON, Eui Joon, Seoul 03112 (KR); YU, Ji Hun, Seongnam-si, Gyeonggi-do 13643 (KR); KWON, Hyun Mo, Seoul 01410 (KR); YOO, Chuck Keun, Seoul 07032 (KR); JO, Yong Hyun, Seoul 08511 (KR); KIM, Jin, Seoul 08511 (KR)
(74) Representative: Cabinet Beau de Loménie
(86) International application number: PCT/KR2024/007434
(87) International publication number: WO 2024/248519

(57) **Abstract**

Disclosed herein are a method for designing cybersecurity for ships and a system and method for providing AI-based interactive cybersecurity guidance services using the same. The method for designing cybersecurity for ships includes: a storage step in which a cybersecurity design database reflecting cybersecurity requirements of shipowners and classification societies and cybersecurity regulations and standards for ships is sent to and stored in a cybersecurity design database unit; a generation step in which a new ship design cybersecurity process is generated by a ship construction process unit based on the cybersecurity design database stored in the storage step; a feedback step in which changes in an external cybersecurity environment occurring during a ship construction period are fed back to the cybersecurity design database unit through a feedback unit to be applied to a new ship constructed through the new ship design cybersecurity process generated in the generation step; and a display step in which cybersecurity matters provided in the feedback step and activities during the ship construction period are visualized and displayed on a ship cybersecurity design dashboard.

## Description

### [Technical Field]

The present invention relates to a method for designing cybersecurity for ships and, more particularly, to a cybersecurity design method that can provide cybersecurity design in a ship construction stage to allow cybersecurity technologies and policies that reflect requirements of shipowners and classification societies and security issues to be applied to a new ship, can perform artificial intelligence-based processing based on various cybersecurity-related data from each country's classification society, and provides users with appropriate cybersecurity-related information based on real-time maritime cybersecurity threat information.

### [Background Art]

Traditionally, ships were built with a focus on safe navigation. However, as ICS technology merged with the shipbuilding and maritime industries, cyber risks to ships have increased. Accordingly, both the international association of classification societies (IACS) and the international maritime organization (IMO) now mandate consideration of cybersecurity design for ships.

For software, security is typically addressed using a secure software development life cycle (SDLC) during software design and manufacture. However, since the scope of this approach is limited to software, there isn't a specific security design methodology that reflects the unique characteristics of the shipbuilding and maritime industries, encompassing both mobile entities, such as ships, and fixed facilities.

In addition, while IACS and IMO mandate consideration of cybersecurity in ship design, they do not provide a concrete methodology. In new ship design, customers (shipowners) expect that their cybersecurity requirements and various cybersecurity regulations will be properly implemented. However, since no standardized criteria or processes exist, there is no way to provide information regarding the cost and schedule impact associated with these cybersecurity requirements.

Furthermore, while new ship design and construction are lengthy processes, an external environment, such as ICT and cybersecurity software, evolve rapidly. Consequently, due to shifts in the external environment, there may be a need for security improvements for initially designed systems and components throughout a design lifecycle. However, the current lack of explicit cybersecurity standards in cybersecurity design for ships can cause adverse effects on both ship construction costs and schedules.

In the past, a ship's cybersecurity manager had to analyze printed or digital documents depending on each country's classification societies, ship profiles, and ship conditions to find appropriate guidance before determining a course of action.

However, this approach faces challenges in identifying the latest cybersecurity guidelines from each country's classification society. In particular, when a ship passes through a third country while in transit, it is difficult to immediately identify the latest cybersecurity guidelines of the corresponding country.

Moreover, the difficulty in identifying specific cybersecurity guidelines tailored to various classification societies, ship profiles, and ship conditions presents problems such as difficulty in confirming response measures in the event of a cybersecurity incident, as well as the absence of available cybersecurity experts.

The related art is disclosed in Korean Patent Registration No. 10-2187710 (published on December 8, 2020), Korean Patent Registration No. 10-1137452 (published on April 20, 2012), and Korean Patent Registration No. 10-2295948 (published on August 30, 2021).

### [Disclosure]

### [Technical Problem]

It is an aspect of the present invention to provide a method for designing cybersecurity in a ship construction stage, which organizes information about essential considerations in new ship design, including cybersecurity requirements of shipowners, cybersecurity requirements of classification societies, international cybersecurity regulations and standards, and best practices and threats, into respective databases, implements a new ship design cybersecurity process based on the databases, applies the cybersecurity process to a ship construction process, and allows changes in an external cybersecurity environment occurring during a construction period to be fed back and applied to a new ship.

It is another aspect of the present invention to provide a system and method for providing AI-based interactive cybersecurity guidance services, which enable identification and implementation of specific and accurate cybersecurity guidance through real-time AI services tailored to various classification societies/ship profiles/ship conditions.

It is a further aspect of the present invention to provide a system and method for providing AI-based interactive cybersecurity guidance services, which enable real-time online identification of response measures in the event of a cybersecurity incident while allowing online access to specialized cybersecurity services.

### [Technical Solution]

In accordance with one aspect of the present invention, a method for designing cybersecurity in a ship construction stage includes: a storage step in which a cybersecurity design database reflecting cybersecurity requirements of shipowners and classification societies and cybersecurity regulations and standards for ships is stored; a generation step in which a new ship design cybersecurity process is generated based on the cybersecurity design database stored in the storage step; a feedback step in which changes in an external cybersecurity environment occurring during a ship construction period are fed back be applied to a new ship constructed through the new ship design cybersecurity process generated in the generation step; and a display step in which cybersecurity matters provided in the feedback step and activities during the ship construction period are visualized and displayed on a dashboard.

In the storage step, a database of cybersecurity best practices and threats may be further stored in the cybersecurity design database to be reflected in the new ship design cybersecurity process.

A series of activities related to the cybersecurity matters identified in the feedback step can be stored and updated in a ship cybersecurity design database.

In the display step, cybersecurity-related changes from shipowners, shipyards, and tool and material suppliers are also displayed for recognition and management thereof.

Upon completion of construction of a new ship, matters identified during a series of cybersecurity design activities are stored in the database of cybersecurity best practices and threats for utilization in future ship construction.

In accordance with another aspect of the present invention, a method for providing AI-based interactive cybersecurity guidance services includes: a database creation step in which a database is created by extracting intelligent maritime information, location information (GPS), and past cybersecurity-related record information from a database unit; a training step in which artificial intelligence-based processing is performed based on the database created in the database creation step and data related to cybersecurity regulations and policies of different organizations/classification societies; and a guidance step in which guidance on regulations and policies specific to a user situation is provided based on real-time maritime cybersecurity threat information through a model trained in the training step.

The training step may include: performing text analysis and vectorization on the data related to cybersecurity regulations and policies of different organizations/classification societies; performing data mapping through word embedding; and creating a trained model and a database.

The guidance step may include: analyzing classification societies/ship profiles/ship conditions; confirming real-time location information; and providing cybersecurity guidance based on matched data.

In accordance with a further aspect of the present invention, a system for providing AI-based interactive cybersecurity guidance services includes: a database unit created by extracting intelligent maritime information, location information (GPS), and past cybersecurity-related record information; a training unit configured to perform artificial intelligence-based processing based on data in the database unit and data related to cybersecurity regulations and policies of different organizations/classification societies; and a guidance unit configured to provide guidance on regulations and policies specific to a user situation based on real-time maritime cybersecurity threat information through a model trained by the training unit.

The training unit may be configured to perform text analysis and vectorization on the data related to cybersecurity regulations and policies of different organizations/classification societies, to perform data mapping through word embedding, and to create a trained model and a database.

The guidance unit may be configured to analyze each country's classification societies /ship profiles/ship conditions, to confirm real-time location information, and to provide cybersecurity guidance based on matched data.

### [Advantageous Effects]

The method for designing cybersecurity according to the present invention can provide confidence to shipowners by visualizing how a new ship can recognize and manage cybersecurity risks through a cybersecurity design methodology for ships.

In addition, the method for designing cybersecurity according to the present invention can contribute to reduction in time and cost associated with ship construction through enhancement of a ship cybersecurity design database (DB).

In addition, the method for designing cybersecurity according to the present invention can strengthen ship cybersecurity competitiveness through accumulation of diverse ship cybersecurity design databases (DBs) that reflect cybersecurity requirements depending on shipowner, classification society, and ship type and changes in an environment related to ICT tools and materials for ships.

In addition, according to the present invention enable identification and implementation of specific and accurate cybersecurity guidance through real-time AI services tailored to various classification societies/ship profiles/ship conditions.

In addition, according to the present invention can ensure real-time online identification of response measures in the event of a cybersecurity incident while allowing online access to specialized cybersecurity services.

### [Description of Drawings]

FIG. 1 is a diagram of a system for designing cybersecurity in a ship construction stage according to the present invention.
FIG. 2 is a flowchart of a method for designing cybersecurity in a ship construction stage according to the present invention.
FIG. 3 is a schematic conceptual diagram of an AI-based interactive cybersecurity guidance service according to the present invention.
FIG. 4 is a flowchart of an AI-based interactive cybersecurity guidance service provision method according to the present invention.

### [Best Mode]

The above and other aspects, features, and advantages of the present invention will become apparent from the detailed description of the following embodiments in conjunction with the accompanying drawings.

The terminology used herein is for the purpose of describing particular embodiments and is not intended to be limiting. As used herein, the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof. Further, as used herein, the singular forms "a", "an" and "the" are intended to include the plural forms as well, unless the context clearly indicates otherwise.

Hereinafter, exemplary embodiments of the present invention will be described in detail with reference to the accompanying drawings. It should be understood that the embodiments are provided for complete disclosure and thorough understanding of the present invention by those skilled in the art and that the present invention is not limited to the following embodiments and may be embodied in different ways by those skilled in the art.

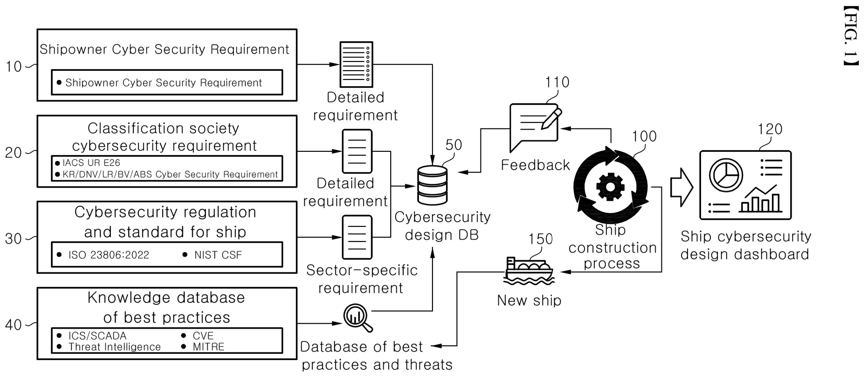

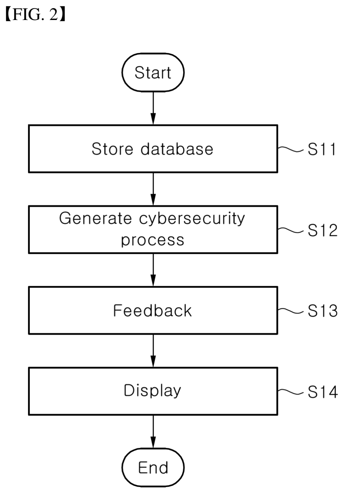

Referring to FIG. 1 and FIG. 2, a method for designing cybersecurity in a ship construction stage according to the present invention may include: a storage step S11 in which a cybersecurity design database reflecting cybersecurity requirements of shipowners and classification societies and cybersecurity regulations and standards for ships is stored in a cybersecurity design database unit 50; a generation step S12 in which a new ship design cybersecurity process is generated by a ship construction process unit 100 based on the cybersecurity design database stored in the storage step S11; a feedback step S13 in which changes in an external cybersecurity environment occurring during a ship construction period are fed back to the cybersecurity design database unit 50 through a feedback unit 110 to be applied to a new ship constructed through the new ship design cybersecurity process generated in the generation step S12; and a display step S14 in which cybersecurity matters provided in the feedback step S13 and activities during the ship construction period are visualized and displayed on a ship cybersecurity design dashboard 120.

In addition, in the storage step S11, a database 40 of cybersecurity best practices and threats may be further stored in the cybersecurity design database unit 50 to be reflected in the new ship design cybersecurity process.

That is, the cybersecurity design database unit 50 may be configured to store at least one of a database 10 of cybersecurity requirements of shipowners, a database 20 of cybersecurity requirements of classification societies, a database 30 of cybersecurity regulations and standards for ships, and a database 40 of cybersecurity best practices and threats.

In addition, a series of activities related to the cybersecurity matters identified in the feedback step S13 may be stored and updated in the ship cybersecurity design database unit 50.

In this way, the method according to the present invention can strengthen ship cybersecurity competitiveness through accumulation of diverse ship cybersecurity design databases (DBs) that reflect cybersecurity requirements depending on shipowner, classification society, and ship type and changes in an environment related to ICT tools and materials.

In addition, in the display step S14, cybersecurity-related changes from shipowners, shipyards, and tool and material suppliers may be displayed on the dashboard 120 together with data about cybersecurity design for recognition and management thereof.

In this way, the method according to the present invention can provide confidence to shipowners by visualizing how a new ship can recognize and manage cybersecurity risks through a cybersecurity design methodology for ships.

Furthermore, upon completion of construction of a new ship according to a ship construction process, matters identified during a series of cybersecurity design activities may be stored in the database 40 of best practices and threats for utilization in future ship construction.

In this way, the method according to the present invention can contribute to reduction in time and cost associated with ship construction through enhancement of the ship cybersecurity design database (DB).

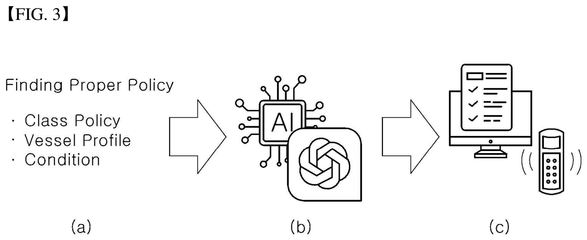

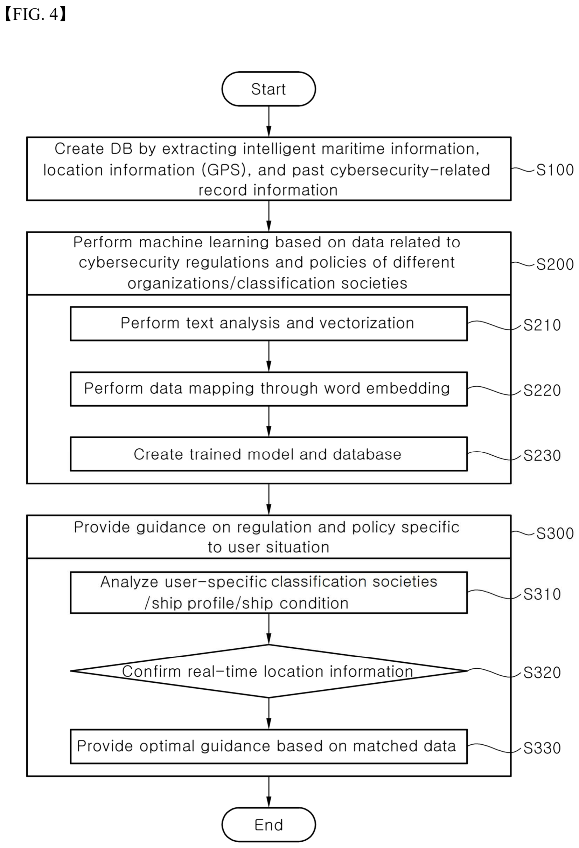

FIG. 3 is a schematic conceptual diagram of an AI-based interactive cybersecurity guidance service according to the present invention, and FIG. 4 is a flowchart of a method for providing an AI-based interactive cybersecurity guide service according to the present invention.

Referring to FIG. 3 and FIG. 4, a system for providing an AI-based interactive cybersecurity guidance service according to one aspect of the present invention enables identification and implementation of specific and accurate cybersecurity guidance through specific cybersecurity guidance-related content and AI services tailored to various classification societies/ship profiles/ship conditions.

FIG. 3(a) illustrates a process of finding and databasing proper policies according to various classification societies/ship profiles/ship conditions.

In addition, a database (DB) gathers and stores intelligent maritime information, location information (GPS), and past cybersecurity-related record information.

FIG. 3(b) illustrates an interactive AI model, wherein the interactive AI model is trained based on the databased data obtained through the process of FIG. 3(a) such that guidance on regulations and policies specific to a user situation is provided based on real-time maritime cybersecurity threat information through the trained AI model.

Here, information is provided through the interactive AI model based on real-time intelligent maritime information, location data, and past cybersecurity-related record information to enable identification and implementation of specific and accurate cybersecurity guidance according to various classification societies/ship profiles/ship conditions.

FIG. 3(c) illustrates the state in which information is provided through the interactive AI model, wherein the information may be presented on a display screen of a user terminal, may be sent as a notification message to a web browser/mobile phone/smartwatch/HID, or may be output as voice through a speaker.

The form in which such a service is provided may vary depending on user's settings, and may include some or all of these options.

In this way, the system according to the present invention enables identification of response measures in the event of a cybersecurity incident, online access to specialized cybersecurity services, and real-time confirmation of cybersecurity guidance through the interactive AI model.

A system for providing AI-based interactive cybersecurity guidance services according to the present invention may include: a database unit 200 created by extracting intelligent maritime information, location information (GPS), and past cybersecurity-related record information; a training unit 300 configured to perform artificial intelligence-based processing based on data in the database unit 200 and data related to cybersecurity regulations and policies of different organizations/classification societies; and a guidance unit 400 configured to provide guidance on regulations and policies specific to a user situation based on real-time maritime cybersecurity threat information through a model trained by the training unit 300.

That is, in response to an inquiry about maritime cybersecurity threats related to real-time intelligent maritime information, location information (GPS), and past cybersecurity record information, the guidance unit 400 may provide a user with guidance on regulations and policies specific to their situation based on real-time maritime cybersecurity threat information through the trained model created by the training unit 300.

Here, the guidance unit 400 provides information through an interactive AI model, wherein the information may be presented on a display screen of a user terminal, may be sent as a text message to a user terminal, or may be output as voice through a speaker.

The form in which such a service is provided may vary depending on user settings and may include some or all of these options.

In addition, the training unit 300 may be configured to perform text analysis and vectorization on the data related to cybersecurity regulations and policies of different organizations/classification societies, to perform data mapping through word embedding, and to create a trained model and a database.

In addition, the guidance unit 400 may be configured to analyze each country's classification societies/ship profiles/ship conditions, to confirm real-time location information, and to provide guidance based on matched data.

Referring to FIG. 4, a method for providing AI-based interactive cybersecurity guidance services according to the present invention may include: a database creation step S100 in which a database is created by extracting intelligent maritime information, location information (GPS), and past cybersecurity-related record information; a training step S200 in which artificial intelligence-based processing is performed based on the database generated in the database generation step S100 and data related to cybersecurity regulations and policies of different organizations/classification societies; and a guidance step S300 in which guidance on regulations and policies specific to a user situation is provided based on real-time maritime cybersecurity threat information through a model trained in the training step S200.

In addition, the training step S200 may include the steps of: performing text analysis and vectorization on the data related to cybersecurity regulations and policies of different organizations/classification societies (S210); performing data mapping through word embedding (S220); and creating a trained model and a database (S230).

That is, in the training step S200, text analysis and vectorization on the database created in the database generation step S100 are performed, data mapping is performed through word embedding, and a trained model is created and stored to create a database.

In addition, the guidance step S300 may include the steps of: analyzing each country's classification societies/ship profiles/ship conditions (S310); confirming real-time location information (S320); and providing guidance based on matched data (S330).

That is, in the guidance step S300, each country's classification societies/ship profiles/ship conditions are analyzed based on real-time maritime cybersecurity threat information, real-time location information is confirmed, and appropriate real-time cybersecurity-related information is provided to a user based on matched data to enable identification and implementation of cybersecurity guidance.

Here, the trained model may be an interactive AI model, and may be configured to provide information to enable identification and implementation of specific and accurate cybersecurity guidance based on real-time intelligent maritime information, location information, and past cybersecurity-related record information according to various classification societies/ship profiles/ship conditions.

In addition, upon providing information through the interactive AI model, the information may be presented on a display screen of a user terminal, may be sent as a notification message to a web browser/mobile phone/smartwatch/HID, or may be output as voice through a speaker.

The form in which such a service is provided may vary depending on user's settings and may include some or all of these options.

In this way, the method according to the present invention enables identification and implementation of specific and accurate cybersecurity guidance through real-time AI services tailored to various classification societies/ship profiles/ship conditions.

In addition, the method according to the present invention can ensure real-time identification of response measures in the event of a cybersecurity incident while allowing online access to specialized cybersecurity services.

Embodiments of the present invention described above may be implemented in the form of program instructions executable by various computer components and recorded on a computer-readable recording medium. The computer-readable recording medium may include program instructions, a data file, a data structure, and the like, solely or in combination. The program instructions recorded on the computer-readable recording medium may be specially designed and constructed for the present invention or may be those known and available to those skilled in the art of computer software. Examples of the computer-readable medium include a hardware device specifically configured to store and execute the program instructions, including: magnetic media, such as hard disks, floppy disks, and magnetic tape; optical recording media, such as CD-ROMs and DVDs; magneto-optical media, such as floptical disks; ROMs; RAMs; and flash memories. Examples of the program commands include not only machine language code generated by a compiler, but also high-level language code executable on a computer using an interpreter or the like. The hardware device may be configured to operate as one or more software modules to perform the operations according to the present invention, or vice versa.

Although some embodiments have been described herein, it should be understood that these embodiments are provided for illustration only and are not to be construed in any way as limiting the present invention, and that various modifications and changes can be made by those skilled in the art without departing from the spirit and scope of the invention. Therefore, the accompanying claims and their equivalents are intended to cover such changes or modifications as would fall within the scope and spirit of the present invention.

### [List of Reference numerals: Free text]

10: Database of shipowner cybersecurity requirements
20: Database of classification society cybersecurity requirements
30: Database of cybersecurity regulations and standards for ships
40: Database of best practices
50: Cybersecurity design database unit
100: Ship construction process unit
110: Feedback unit
200: Database unit
300: Training unit
400: Guidance unit
120: Ship cybersecurity design dashboard
150: Use in construction of a new ship

## Claims

1. A method for designing cybersecurity for ships, comprising:
a storage step in which a cybersecurity design database reflecting cybersecurity requirements of shipowners and classification societies and cybersecurity regulations and standards for ships is sent to and stored in a cybersecurity design database unit;
a generation step in which a new ship design cybersecurity process is generated by a ship construction process unit based on the cybersecurity design database stored in the storage step;
a feedback step in which changes in an external cybersecurity environment occurring during a ship construction period are fed back to the cybersecurity design database unit through a feedback unit to be applied to a new ship constructed through the new ship design cybersecurity process generated in the generation step; and
a display step in which cybersecurity matters provided in the feedback step and activities during the ship construction period are visualized and displayed on a ship cybersecurity design dashboard.

2. The method according to claim 1, wherein, in the storage step, a database of cybersecurity best practices and threats is further stored in the cybersecurity design database unit to be reflected in the new ship design cybersecurity process.

3. The method according to claim 1, wherein a series of activities related to the cybersecurity matters identified in the feedback step are updated and stored in the cybersecurity design database unit through the feedback unit.

4. The method according to claim 1, wherein, in the display step, cybersecurity-related changes from shipowners, shipyards, and tool and material suppliers are also displayed for recognition and management thereof.

5. The method according to claim 2, wherein, upon completion of construction of a new ship, matters identified during a series of cybersecurity design activities are stored in the database of cybersecurity best practices and threats for utilization in future ship construction.

6. A method for providing AI-based interactive cybersecurity guidance services, comprising:
a database creation step in which a database is created by extracting intelligent maritime information, location information (GPS), and past cybersecurity-related record information from a database unit;
a training step in which artificial intelligence-based processing is performed by a training unit based on the database created in the database creation step and data related to cybersecurity regulations and policies of different organizations/classification societies; and
a guidance step in which guidance on regulations and policies specific to a user situation is provided by a guidance unit based on real-time maritime cybersecurity threat information through a model trained in the training step.

7. The method according to claim 6, wherein the training step comprises:
performing, by the training unit, text analysis and vectorization on the data related to cybersecurity regulations and policies of different organizations/classification societies;
performing data mapping through word embedding; and
creating a trained model and a database.

8. The method according to claim 6, wherein the guidance step includes:
analyzing, by the guidance unit, each country's classification societies, ship profiles, and ship conditions through an interactive AI model;
confirming real-time location information; and
providing cybersecurity guidance based on matched data.

9. A system for providing AI-based interactive cybersecurity guidance services, comprising:
a database unit created by extracting intelligent maritime information, location information (GPS), and past cybersecurity-related record information;
a training unit configured to perform artificial intelligence-based processing using data in the database unit and data related to cybersecurity regulations and policies of different organizations/classification societies; and
a guidance unit configured to provide guidance on regulations and policies specific to a user situation based on real-time maritime cybersecurity threat information through a model trained by the training unit.

10. The system according to claim 9, wherein the training unit performs text analysis and vectorization on the data related to cybersecurity regulations and policies of different organizations/classification societies, performs data mapping through word embedding, and creates a trained model and a database.

11. The system according to claim 9, wherein the guidance unit analyzes each country's classification societies, ship profiles, and ship conditions through an interactive AI model, confirms real-time location information, and provides cybersecurity guidance based on matched data.
